# EUROPEAN PATENT SPECIFICATION

(11) **EP 2 407 813 B1**
(45) Date of publication and mention of the grant of the patent: **21.08.2013**
(21) Application number: 10750706.3
(22) Date of filing: 01.03.2010
(51) Int. Cl.: G03H 1/04, G02B 27/22, G03H 1/30

(54) **THREE-DIMENSIONAL IMAGE PROJECTION DEVICE**
DREIDIMENSIONALER BILDPROJEKTOR
DISPOSITIF DE PROJECTION D'IMAGE TRIDIMENSIONNELLE

(30) Priority: 09.03.2009 JP 2009055473
(43) Date of publication of application: 18.01.2012
(73) Proprietor: National University Corporation Toyohashi University of Technology, Toyohashi-shi Aichi 441-8580 (JP); HolyMine Corporation, Kanagawa 243-0813 (JP)
(72) Inventor: INOUE Mitsuteru, Toyohashi-shi Aichi 441-8580 (JP); LIM Pang Boey, Toyohashi-shi Aichi 441-8580 (JP); HORIMAI Hideyoshi, Numazu-shi Shizuoka 410-0022 (JP)
(74) Representative: HOFFMANN EITLE
(86) International application number: PCT/JP2010/053267
(87) International publication number: WO 2010/103952

(56) References cited:
- WO-A1-2008/124135
- JP-A- 2007 219 491
- US-A1- 2007 183 011

## Description

### Technical Field

The present invention relates to a three-dimensional image projector which projects a three-dimensional image by causing image light having directivity to fall incident from the outside.

### Background Art

Conventionally, the development of image display systems capable of displaying a three-dimensional image of an object in space has been actively conducted in order to display highly realistic images. As an example of this kind of system, known is a three-dimensional image display device for forming a three-dimensional image by rearranging the respective pixels of a directivity image and forming a composite image, and displaying such composite image using a liquid crystal display and a lenticular sheet, and a three-dimensional image display device for displaying a three-dimensional image by projecting images generated by a plurality of image generating means on a display unit including a reflection mechanism (refer to JP 2007-17634 A and JP 09-197581 A).

Document US 2007/0183011 A1 discloses a recording system for the fabrication of most similar H2 holograms with multiple similar H1 holograms applied onto them (Fig. 25). However, this system is not a three-dimensional image projector since there is no rotational drive or table that can rotate the hologram recording medium on a tabular substrate along a surface thereof. Moreover, the H1 hologram of this disclosure is not of a mode formed from parallel reference and object beams simultaneously incident on the hologram recording medium.

### Summary of the Invention

### Technical Problem

Nevertheless, with the device described in Patent Literature 1, since pixels with a plurality of directivities are arranged on a display, the resolution of the three-dimensional image tends to deteriorate if such three-dimensional image is to be displayed in response to changes in the viewer's position. Moreover, with the device described in Patent Literature 2, in order to reproduce a three-dimensional image according to the position of the viewer observing the three-dimensional image, there is a problem in that the size of the system needs to be enlarged since numerous image creation means must be prepared in advance.

The present invention was devised in view of the foregoing problems. Thus, an object of this invention is to provide a three-dimensional image projector capable of displaying a highly reproducible three-dimensional image in response to changes in the viewer's position and easily realizing the miniaturization of the system.

### Solution to Problem

In order to achieve the foregoing object, the three-dimensional image projector of the present invention has: a projection image formation unit in which a hologram recording medium is formed along a tabular substrate, and which projects image light by causing the image light having directivity to fall incident on the hologram recording medium; and a drive unit which rotationally drives the projection image formation unit along a surface of the substrate, with a predetermined point on the surface serving as a rotation center, wherein the hologram recording medium of the projection image formation unit is preliminarily recorded with a hologram of a mode that is formed by causing reference light and object light as two laser beams to simultaneously fall incident on the hologram recording medium, while maintaining an incidence angle thereof to be substantially the same, in a predetermined range including a position corresponding to the predetermined point.

According to the foregoing three-dimensional image projector, since the projection image formation unit is preliminarily recorded with a hologram in a predetermined range along the tabular substrate including a position corresponding to the predetermined point serving as a rotation center by causing reference light and object light to simultaneously fall incident at a substantially same incidence angle, the projecting direction of the image that is generated by the image light passing through the hologram will spatially shift continuously as a result of the image light having directivity falling incident toward the projection image formation unit while rotating that projection image formation unit around its predetermined point. Consequently, it is possible to display a highly reproducible three-dimensional image even if the viewer's position is changed, and also easily miniaturize the system size. In addition, as a result of recording a hologram of a mode that is formed by causing the reference light and the object light to fall incident at the same incidence angle, the temporal continuity of the image upon rotating the projection image formation unit can be improved.

Preferably, the hologram recording medium of the projection image formation unit is preliminarily recorded with a plurality of holograms in multiple layers of a mode that are formed by causing the reference light and the object light to fall incident on the predetermined range simultaneously with being rotationally driven with the position corresponding to the predetermined point as the rotation center. In the foregoing case, it is possible to cause the image light to pass through the plurality of holograms upon rotating the projection image formation unit, and the spatial and temporal continuity of the projected image can be easily improved.

Moreover, preferably, the hologram recording medium of the projection image formation unit is preliminarily recorded with a plurality of holograms in a divided manner of a mode that are formed by causing the reference light and the object light to fall incident on a range where the predetermined range is divided at intervals in synchronization with the rotation angle based on the rotational drive simultaneously with being rotationally driven with the position corresponding to the predetermined point as the rotation center. In the foregoing case, it is possible to cause the image light to pass through the plurality of holograms upon rotating the projection image formation unit, and the spatial and temporal continuity of the projected image can be easily improved. In addition, the configuration of the hologram recording medium can be simplified.

Moreover, preferably, the hologram recording medium includes a plurality of hologram sheet materials laminated on the substrate, and the plurality of holograms are respectively recorded on the plurality of hologram sheet materials. As a result of possessing the foregoing hologram recording medium, it is possible to improve the diffraction efficiency of the image light passing through the respective holograms, and display a bright three-dimensional image with minimal image blurring to the viewer.

In addition, preferably, the image light falls incident toward a predetermined range on the substrate at an angle corresponding to the incidence angle of the reference light and the object light during the hologram recording relative to the surface on the substrate while the projection image formation unit is being rotationally driven by the drive unit. As a result of adopting the foregoing configuration, the incident direction of the image light relative to the hologram recording medium and the incident direction of the reference light and object light will substantially coincide. Thus, it is possible to improve the diffraction efficiency of the image light passing through the respective holograms, and display a bright three-dimensional image with minimal image blurring to a predetermined direction.

### Advantageous Effect of the Invention

According to the present invention, it is possible to display a highly reproducible three-dimensional image in response to changes in the viewer's position and easily realize the miniaturization of the system.

### Brief Description of Drawings

Fig. 1 is a perspective view of the three-dimensional image projector 1 according to a preferred embodiment of the present invention.
Fig. 2 is a plan view and a side view of the projection image forming disc of Fig. 1.
Fig. 3 is a schematic configuration diagram of the hologram recording system to be used for recording the hologram of Fig. 2.
Fig. 4 is a diagram showing the image light incident direction and the image projecting direction relative to the projection image forming disc of Fig. 2.
Fig. 5 is a diagram showing the image light incident direction and the image projecting direction relative to the projection image forming disc of Fig. 2.
Fig. 6 is a graph showing the actual measured value and the theoretical value of the diffraction efficiency relative to the shift angle along the horizontal direction of the image irradiating direction in the case of rotating the hologram of Fig. 2.
Fig. 7 is a graph showing the relationship of the measured value of the diffraction efficiency of the image irradiating direction to the rotation angle of the projection image forming disc of Fig. 2.
Fig. 8 is a front view showing the projected image of the three-dimensional image by the three-dimensional image projector of Fig. 1.
Fig. 9 is a plan view of the projection image forming disc according to a modified example of the present invention.

### Description of Embodiments

A preferred embodiment of the three-dimensional image projector according to the present invention is now explained in detail with reference to the attached drawings. Note that the same reference numeral is given to the same or corresponding components in the explanation of the drawings, and any redundant explanation is omitted.

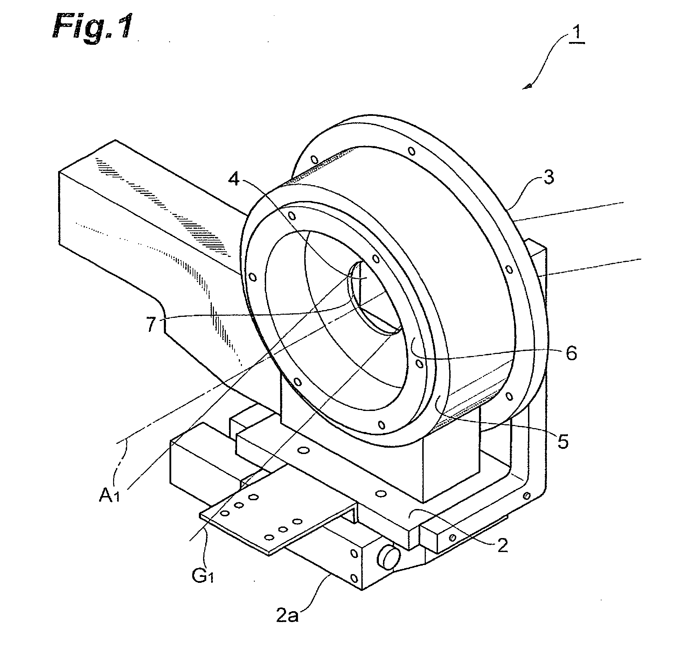

Fig. 1 is a perspective view of the three-dimensional image projector 1 according to a preferred embodiment of the present invention. The three-dimensional image projector 1 is a device for projecting a three-dimensional image by causing image light having directivity, which fell incident from the outside, to be transmitted therethrough, and comprises a rotational drive unit 3 fixed on a pedestal 2, and a projection image forming disc (projection image formation unit) 4 supported by the rotational drive unit 3.

The rotational drive unit 3 includes an outer cylinder 5 and an inner cylinder 6 disposed so that its center axis A₁ is approximately parallel to a mounting surface 2a of the pedestal 2, and the inner cylinder 6 is mounted rotatably along an inner surface of the outer cylinder 5. The rotational drive unit 3 has a built-in rotational drive mechanism not shown for rotating the inner cylinder 6 around its center axis A₁ at an intended angular velocity based on the supply of power from the outside. This kind of rotational drive mechanism can be realized with an electric motor, and a belt drive, a gear and the like.

Moreover, a rectangular opening 7 that is approximately perpendicular to the center axis A₁ is provided to the inner central part of the inner cylinder 6, and the disk-shaped projection image forming disc 4 is supported on the inner center axis A₁ of the inner cylinder 6 so as to cover the opening 7. The projection image forming disc 4 is disposed so that the center axis A₁ of the inner cylinder 6 penetrates the center of its surface in a perpendicular direction.

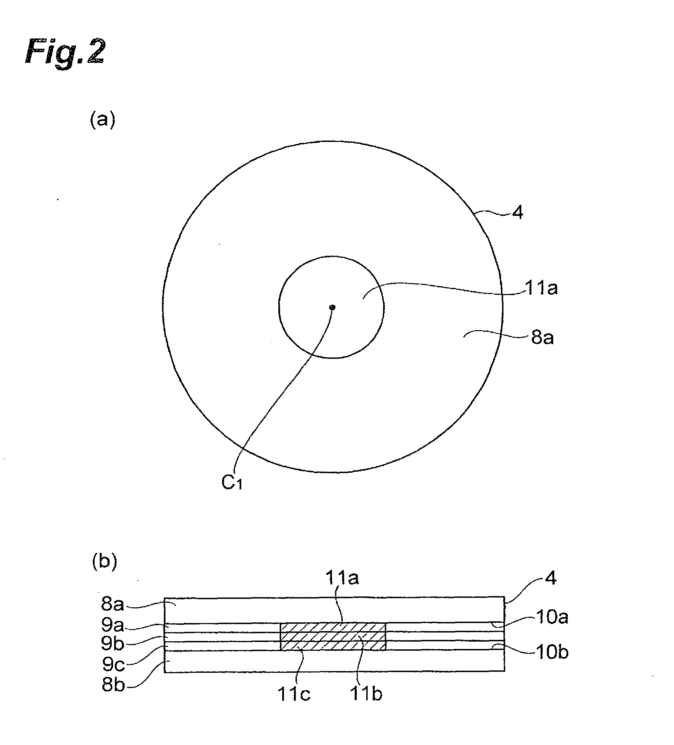

Fig. 2(a) and Fig. 2(b) are a plan view and a side view of the projection image forming disc 4, respectively. As shown in Fig. 2(a) and Fig. 2(b), the projection image forming disc 4 is structured by three-layer hologram sheets (hologram recording mediums) 9a, 9b, 9c, which have the same shape as glass substrates 8a, 8b, being laminated and bonded between two disk-shaped light permeable glass substrates 8a, 8b. Specifically, the hologram sheets 9a, 9b, 9c are bonded along the inner surfaces 10a, 10b of the glass substrates 8a, 8b. As the material of the hologram sheets 9a, 9b, 9c, for example, photopolymer is used. Moreover, although there is no particular limitation on the thickness of the glass substrates 8a, 8b and the hologram sheets 9a, 9b, 9c, for example, the thickness is set to 1.2 mm and 0.003 to 0.4 mm, respectively. Moreover, the number of layers of the hologram sheets 9a, 9b, 9c is not limited to three layers so as long as it is one or more layers, but three layers are preferable from the perspective of the spatial and temporal continuity and clarity of the reproduced image. In addition, circular holograms 11a, 11b, 11c are preliminarily recorded at the central part of the hologram sheets 9a, 9b, 9c, respectively, based on the formation method described later. According to this kind of configuration, when the projection image forming disc 4 is set on the rotational drive unit 3, the projection image forming disc 4 rotates along the surface of the glass substrate 8a with a center point C₁, which is positioned within a formation area of the holograms 11a, 11b, 11c, as the rotation center based on the rotational drive of the rotational drive unit 3.

The method of recording the holograms 11a, 11b, 11c of the projection image forming disc 4 is now explained.

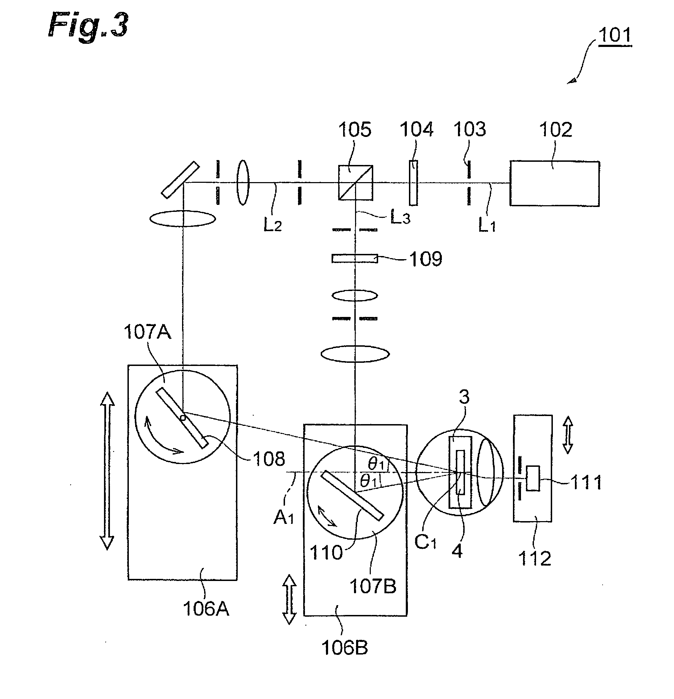

Fig. 3 is a schematic configuration diagram of the hologram recording system 101 that is used for recording the holograms 11a, 11b, 11c. With the hologram recording system 101, a laser beam L₁ with a predetermined wavelength of, for example, 532 nm is output from a laser beam source 102, and the laser beam L₁ passes through a shutter 103, and is thereafter transmitted through a half wavelength plate 104 that rotates around an optical axis of the laser beam L₁. As a result of the laser beam L₁, in which its polarizing direction has been changed in various angles, falling incident on the polarizing beam splitter 105, parallel light L₂ of a P wave component and a parallel light L₃ of an S wave component are divided into two from the laser beam L₁ toward an optical paths that are approximately perpendicular to each other.

The parallel light L₂ produced as described above is reflected with a mirror 108 mounted on an X axis stage 106A which slides along a horizontal plane and on a rotating stage 107A which rotates along a horizontal plane, and thereby falls incident toward the projection image forming disc 4, which is disposed to be perpendicular to a horizontal plane at a predetermined position, at an intended angle along the horizontal plane. Meanwhile, the parallel light L₃ is transmitted through the half wavelength plate 109 rotating around the optical axis of the parallel light L₃ and thereafter reflected with a mirror 110, and, after its polarizing direction is changed, falls incident toward the projection image forming disc 4 disposed at a predetermined position. The mirror 110 is mounted on an X axis stage 106B which slides along the horizontal plane and a rotating stage 107B which rotates along the horizontal plane. Here, the parallel light L₃ that falls incident on the projection image forming disc 4 is used as reference light for recording the hologram, and the parallel light L₂ is used as object light for recording the hologram.

Upon recording holograms using this kind of hologram recording system 101, foremost, the projection image forming disc 4 in a state where only the hologram sheet 9a is bonded is disposed in a state of being mounted on the rotational drive unit 3. Subsequently, the X stage 106A and the rotating stage 107A are controlled so that the center point C₁ of the projection image forming disc 4 is positioned substantially above the optical axis of the parallel light L₂, and the optical axis of the parallel light L₂ is inclined roughly at an angle θ₁ relative to the surface of the glass substrate 8a. Similarly, the X stage 106B and the rotating stage 107B are controlled so that the center point C₁ is positioned substantially above the optical axis of the parallel light L₃, and the optical axis of the parallel light L₃ is inclined relative to the surface of the glass substrate 8a at the substantially same angle θ₁ on the opposite side relative to the parallel light L₂. For example, the inclination angle θ₁ is set to 22.5 degrees. In this state, the laser beam L₁ is output at a predetermined intensity (for example, 2 mW to 7 mW) and the shutter 103 is opened so as to cause the parallel light L₂ and the parallel light L₃ to simultaneously fall incident on the projection image forming disc 4 for a predetermined time (for example, 20 seconds to 30 seconds). The hologram 11a is thereby recorded at the center of the hologram sheets 9a.

Subsequently, the projection image forming disc 4 laminated with the hologram sheet 9b on the hologram sheet 9a is mounted. After rotating the projection image forming disc 4 120 degrees by the rotational drive unit 3 from its state during the recording of the hologram 11a, the shutter 103 is opened so as to cause the parallel light L₂ and the parallel light L₃ to simultaneously fall incident on the projection image forming disc 4 for a predetermined time, whereby the hologram 11b is recorded at the center of the hologram sheet 9b on the hologram sheet 9a. Similarly, the projection image forming disc 4 laminated with the hologram sheet 9c on the hologram sheets 9a, 9b is mounted, and after rotating the projection image forming disc 4 a further 120 degrees, the shutter 103 is opened so as to record the hologram 11c at the center of the hologram sheet 9c on the hologram sheets 9a, 9b. Based on the foregoing operation, three layers of holograms 11a, 11b, 11c subject to angular multiplexing are recorded at the center of the projection image forming disc 4 at an angular interval of 120 degrees in a state where the incidence angle θ₁ of the reference light and object light to the hologram sheets 9a, 9b, 9c is mutually substantially the same.

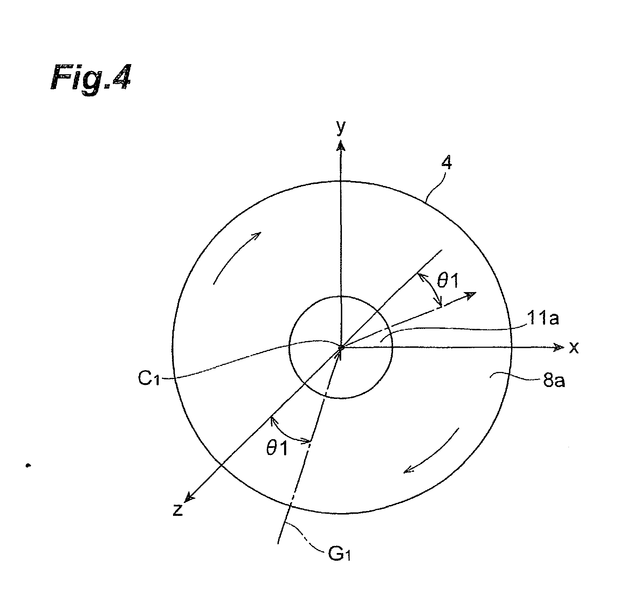

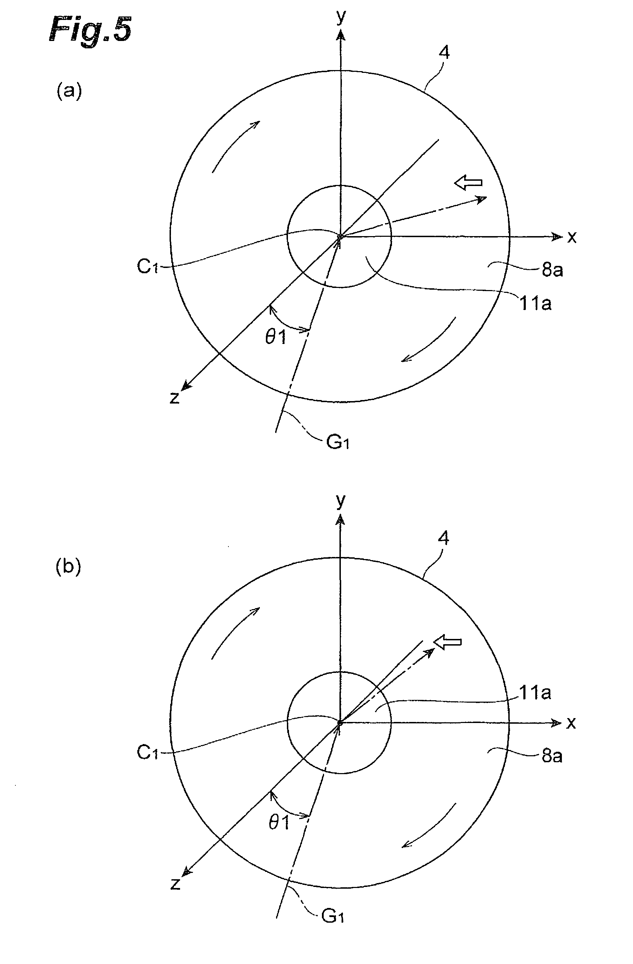

Fig. 4 and Fig. 5 show the irradiating direction of the image that is reproduced on the opposite side of the projection image forming disc 4 when the image light G₁ falls incident from the outside on the hologram 11a of the projection image forming disc 4 fabricated with the foregoing method. Fig. 4 and Fig. 5 take on the Z axis along the central axis of the projection image forming disc 4, and take on the X axis and the Y axis in the horizontal direction and the vertical direction along the surface of the glass substrate 8a. As shown in Fig. 4, if the image light G₁ falls incident from the same direction as the incident direction of the parallel light L₃ upon recording the hologram 11a; that is, falls incident from the direction of the angle θ₁ relative to the Z axis along the YZ plane, the image projecting direction will be a direction that is inclined by the angle θ₁ relative to the Z axis along the YZ plane in correspondence with the incident direction of the parallel light L₂ during the recording of the hologram 11a.

Meanwhile, immediately before the state of Fig. 4 in the case of assuming that the hologram 11a is rotated clockwise around the Z axis, the state is as shown in Fig. 5(a). Here, the image projecting direction will be a direction that deviates in the +X axis direction from the direction along the YZ plane. Meanwhile, immediately after the state shown in Fig. 4, the state is as shown in Fig. 5(b), and the image projecting direction will be a direction that deviates in the -X axis direction from the direction along the YZ plane. This is because the diffraction grating formed on the hologram 11a rotates and the diffraction direction of light also changes with the rotation of the diffraction grating.

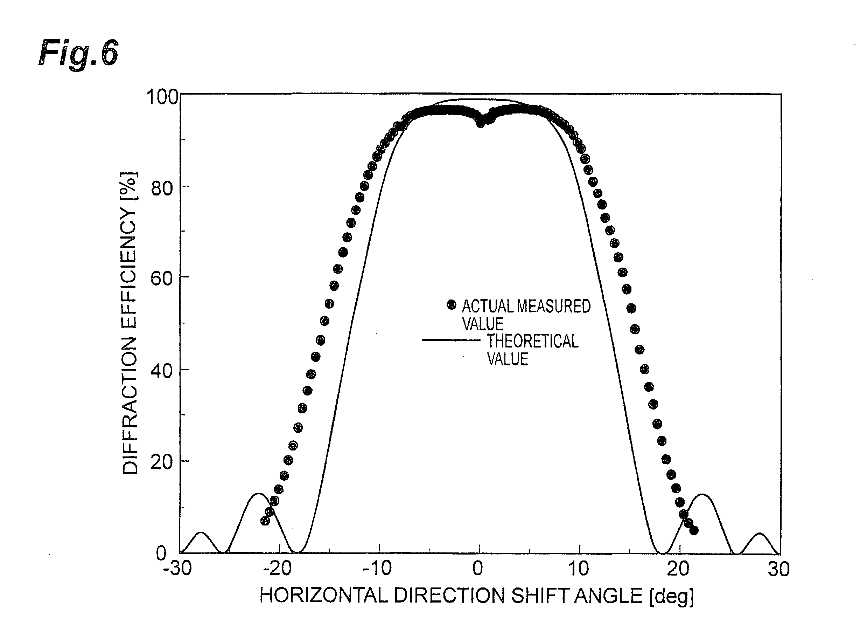

If this kind of phenomenon is used and the image light is caused to fall incident on the surface of the glass substrate 8a at an incidence angle of θ₁ while rotating the hologram 11a along that surface within a predetermined angular range, the irradiating direction of the generated image can be shifted to a single direction. Fig. 6 is a graph showing the actual measured value and the theoretical value of the diffraction efficiency relative to the shift angle along the horizontal direction of the image irradiating direction in the case of rotating one hologram 11a. Accordingly, high diffraction efficiency of approximately 90% is maintained where the shift angle of the horizontal direction is within the range of-10 degrees to +10 degrees.

The operation of the three-dimensional image projector device 1 having the projection image forming disc 4 in which three holograms 11a, 11b, 11c are multi-recorded at an angular interval of 120 degrees is now explained. While rotationally driving the projection image forming disc 4 360 degrees, the states shown in Fig. 5(a), Fig. 4, and Fig. 5(b) will sequentially appear once, and the image irradiating direction is shifted to a single direction. Moreover, while the projection image forming disc 4 is rotated 360 degrees, the state of rotating 180 degrees from the state shown in Fig. 4 will also appear once. In the foregoing case, the incident direction of the image light G₁ will become the same direction as the incident direction of the laser beam L₂ during the recording of the hologram 11a, and the image projecting direction will become a direction that is inclined by the angle θ₁ relative to the Z axis along the YZ plane in correspondence with the incident direction of the parallel light L₃ during the recording of the hologram 11a; that is, the same direction as the direction shown in Fig. 4. Accordingly, while the projection image forming disc 4 is rotated 360 degrees, the state of rotating 180 degrees from the states shown in Fig. 5(a), Fig. 4, and Fig. 5(b) will also appear once each. Thus, with respect to the hologram 11a, the image irradiating direction is shifted in a single direction a total of two times. In addition, when considering that three holograms 11a, 11b, 11c are multiplexed, while the projection image forming disc 4 is rotated 360 degrees, the image projection direction is shifted intermittently by the three holograms 11a, 11b, 11c, and the shifting will occur a total of six times.

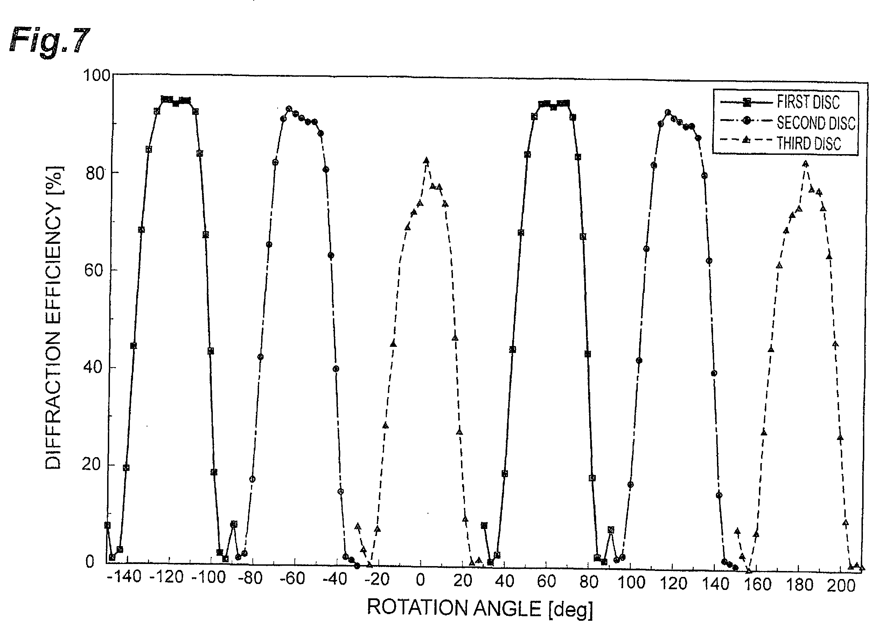

Fig. 7 is a graph showing the relationship of the measured value of the diffraction efficiency of the image irradiating direction to the rotation angle of the projection image forming disc 4. Based on these results, it was discovered that the images are continuously projected six times by the three holograms 11a, 11b, 11c during a 360-degree rotation, and it was also discovered that the diffraction efficiency at such time was approximately 80% across a shift range of approximately 20 degrees for each projection.

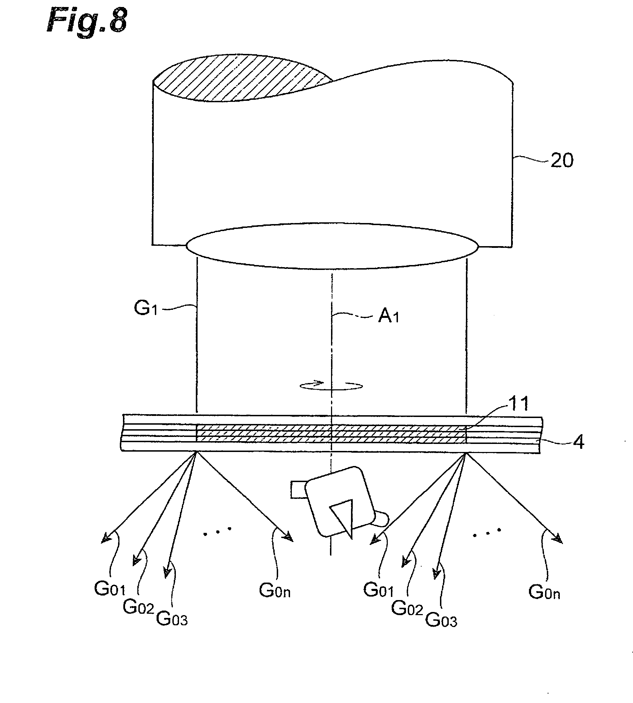

The image light G₁ having directivity falls incident on the three-dimensional image projector 1 configured as described above from the outside projector device 20 from a direction that is inclined a predetermined angle θ₁ relative to the central axis A₁ of the inner cylinder 6 (refer to Fig. 8). Consequently, by causing the image light G₁ to fall incident in synchronization with the shift timing of the image by the three holograms 11a, 11b, 11c, the image lights G₀₁, G₀₂, G₀₃, ..., G₀ₙ are projected in time series while the outgoing direction from the projection image forming disc 4 changes along a single direction. In addition, if the image light G₁ is caused to fall incident by continuously rotating the projection image forming disc 4, the image lights G₀₁, G₀₂, G₀₃,..., G₀ₙ can be repeatedly projected. Consequently, a predetermined three-dimensional image can be popped up at the front face of the projection image forming disc 4.

Here, the projector device 20 is a device that is able to continuously irradiate the image light G₁ to which the moving image was reflected, and, for example, a projection device equipped with a digital micro mirror device manufactured by Texas Instruments is used.

According to the three-dimensional image projector 1 explained above, since the projection image forming disc 4 is preliminarily recorded with holograms 11a, 11b, 11c in a predetermined range including a position along inner surfaces 10a, 10b of glass substrates 8a, 8b including a center point C₁ as the rotation center by causing reference light and object light to fall incident at a substantially same incidence angle θ₁, the projecting direction of the image that is generated by the image light passing through the holograms 11a, 11b, 11c will spatially shift continuously as a result of the image light having directivity falling incident toward the projection image forming disc 4 while rotating that projection image forming disc 4 around its center point C₁. Consequently, it is possible to display a highly reproducible three-dimensional image even if the viewer's position is changed, and also easily miniaturize the system size. In addition, as a result of recording the holograms 11a, 11b, 11c of a mode that are formed by causing the reference light and the object light to fall incident at the same incidence angle θ₁, the image projecting direction can be shifted six times while rotating the projection image forming disc 4 360 degrees. Thus, the spatial and temporal continuity of the image upon rotating the projection image forming disc 4 can be improved.

Moreover, since the plurality of holograms sheets 9a, 9b, 9c of the projection image forming disc 4 are respectively preliminarily recorded with the plurality of holograms 11a, 11b, 11c in multiple layers, it is possible to cause the image light to pass through the plurality of holograms 11a, 11b, 11c upon rotating the projection image forming disc 4, and the spatial and temporal continuity of the projected image can be easily improved. By recording on each of the hologram sheets 9a, 9b, 9c, it is possible to improve the diffraction efficiency of the image light passing through the respective holograms 11a, 11b,11c, and display a bright three-dimensional image with minimal image blurring to the viewer.

Furthermore, since the image light falls incident on the projection image forming disc 4 at an angle θ₁ corresponding to the incidence angle of the reference light and the object light during the hologram recording relative to the projection image forming disc 4, it is possible to improve the diffraction efficiency of the image light passing through the respective holograms 11a, 11b, 11c, and display a bright three-dimensional image with minimal image blurring to a predetermined direction.

Note that the present invention is not limited to the foregoing embodiments. For example, the incidence angle θ₁ of the parallel light L₃ and the parallel light L₂ upon recording the respective holograms 11a, 11b, 11c does not necessarily have to be set to be mutually equal, and may be a different angle, or the respective holograms 11a, 11b, 11c may be multi-recorded without changing the angle of the projection image forming disc 4 upon the recording thereof. For example, when recording holograms for displaying a three-dimensional color image, only the laser beam L₁ of a green optical range (532 nm) is used to record the hologram 11a at an incidence angle θ₁ = 10 degrees, record the hologram 11b at an incidence angle θ₁ = 8.352 degrees, and record the hologram 11c at an incidence angle θ₁ = 13.348 degrees. In the foregoing case, the projection timing of the color image light by the projector device 20 and the rotation of the projection image forming disc 4 are synchronized so that the hologram 11a is used to project the green optical range of the image light G₁ as the image, the hologram 11b is used to project the red optical range of the image light G₁ as the image, and the hologram 11c is used to project the blue optical range of the image light G₁ as the image. Consequently, even if the light of the respective color components of RGB of the image light G₁ is caused to fall incident along the incidence angle θ₁ based on the respective holograms 11b, 11a, 11c, it is possible to shift the light in a single direction while separating and projecting it at the same diffraction angle. It is thereby possible to display a three-dimensional color image with minimal image blurring and color bleeding to the viewer. In addition, upon recording the holograms while causing the incidence angle to be different as described above, it is possible to multi-record the holograms without rotating the projection image forming disc 4 and keeping it fixed.

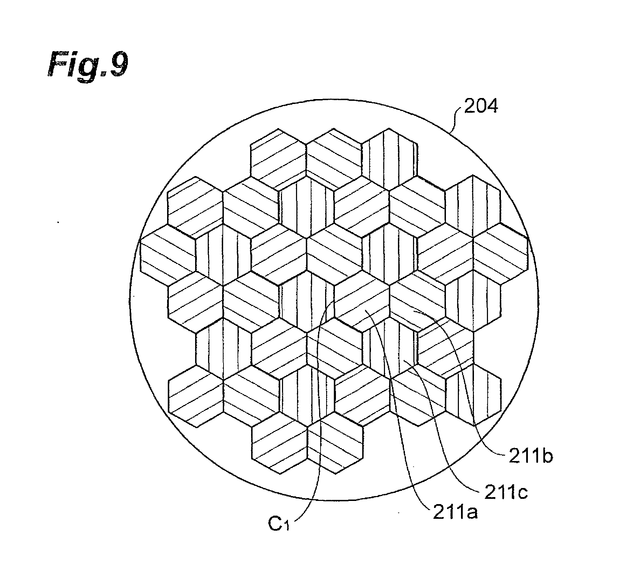

Moreover, as the configuration of the projection image forming disc 4, without limitation to a configuration where a plurality of layers of hologram sheets are laminated, it is also possible to use a configuration where a plurality of holograms micro-fabricated on a single layer of a hologram sheet are divided and recorded. Fig. 9 shows the configuration of a projection image forming disc 204 according to a modified example of this invention. The predetermined range centered around the center point C₁ of the projection image forming disc 204 shown in Fig. 9 is preliminarily recorded with three types of holograms 211a, 211b, 211c in a divided manner. These holograms 211a, 211b, 211c are formed in a divided at intervals range so that they are mutually distributed evenly on a predetermined range, and, for example, the holograms 211a, 211b, 211c are formed so as to be aligned at intervals in that order in alignment with a hexagonal divided range.

The generation of the projection image forming disc 204 as shown in Fig. 9 is performed by using the hologram recording system 101 shown in Fig. 3, and the holograms 211 a, 211b, 211 c are recorded by causing the parallel light L₂ and the parallel light L₃ to fall incident simultaneously on the foregoing divided range on the disc 204 in synchronization with the angle of the rotational drive while being rotationally driven with the center point C₁ as the rotation center. Specifically, the hologram 211a is recorded by causing the parallel light L₂ and the parallel light L₃ to fall incident simultaneously in a state where an optical mask, which only allows the laser beam to pass through the intended divided range, is disposed on the front face of the projection image forming disc 204. Subsequently, after rotating the projection image forming disc 204 120 degrees and recording the hologram 211b with the same method, the projection image forming disc 204 is rotated 120 degrees and the hologram 211c is recorded with the same method. According to the foregoing method, it is possible to divide and generate the holograms 211a, 211b, 211c in which the interference patterns are rotated 120-degree with each other.

As a result of using this kind of projection image forming disc 204, the projection timing of the image light G₁ of the respective color optical ranges of the color image by the projector device 20 and the rotation of the projection image forming disc 204 are synchronized so that the hologram 211a is used to project the green optical range of the image light G₁ as the image, the hologram 211b is used to project the red optical range of the image light G₁ as the image, and the hologram 211c is used to project the blue optical range of the image light G₁ as the image. Consequently, it is possible to shift the light of the respective color components of RGB of the image light G₁, while separating and projecting it, by the respective holograms 211b,211 a, 211c. It is thereby possible to display a three-dimensional color image with minimal image blurring and color bleeding to the viewer. In addition, the configuration of the hologram recording medium can be simplified.

Moreover, as the holograms to be fabricated on the projection image forming disc 4, without limitation to holograms of a direct formation based on the interference of the reference light and the object light, it is also possible to fabricate holograms of a mode of an interference pattern that are formed by causing the reference light and the object light to fall incident at the same incidence angle. For example, holograms formed with a diffraction grating of a high aspect ratio based on the microfabrication process using an electron beam lithography system or the like. As a sheet material formed with this kind of hologram, used may be a transmission-type diffraction grating film (for instance, 1000 LPM sheet manufactured by Edmund Optics) in which a sine wave grating is formed at a predetermined grating frequency. Moreover, as the holograms that are fabricated on the projection image forming disc 4, without limitation to transmission type holograms, reflective holograms can also be used.

Further still, as the material configuring the projection image forming disc 4, a resin material such as plastic may also be used in addition to glass, and it may also be configured only from a hologram recording material.

### Industrial Applicability

The present invention employs a three-dimensional image projector for projecting a three-dimensional image by causing image light having directivity to fall incident from the outside, and is able to display a highly reproducible three-dimensional image in response to changes in the viewer's position and easily realize the miniaturization of the system.

### Reference Signs List

1...three-dimensional image projection device, 3...rotational drive unit, 4, 204...projection image forming disc (projection image formation unit), 8a, 8b...glass substrate, 9a, 9b, 9c...hologram sheet (hologram recording medium), 11a, 11b, 11c, 211a, 211b, 11c...hologram, C₁...center point, G₁...image light, L₂...laser beam (object light), L₃...parallel light (reference light), θ₁...incidence angle.

## Claims

1. A three-dimensional image projector (1), comprising:
a projection image formation unit (4, 204) in which a hologram recording medium (9a, 9b, 9c) is formed along a tabular substrate (8a, 8b), and which projects image light (G₁) by causing the image light having directivity to fall incident on the hologram recording medium; and
a drive unit (3) which rotationally drives the projection image formation unit along a surface of the substrate, with a predetermined point on the surface serving as a rotation centre (C₁), while causing the image light for image projection to fall incident on the projection image formation unit,
wherein the hologram recording medium of the projection image formation unit is preliminarily recorded with a hologram of a mode that is formed by causing reference light (L₃) and object light (L₂) as two parallel lights generated from laser beams to simultaneously fall incident on the hologram recording medium, while maintaining an incidence angle (θ₁) thereof to be substantially the same, in a predetermined range including a position corresponding to the predetermined point.

2. The three-dimensional image projector (1) according to claim 1, wherein the hologram recording medium (9a, 9b, 9c) of the projection image formation unit (4, 204) is preliminarily recorded with a plurality of holograms (11a, 11b, 11c, 211a, 211b, 211c) which mutually overlap in multiple layers of a mode that are formed by causing the reference light (L₃) and the object light (L₂) to fall incident on the predetermined range simultaneously with when the medium is rotationally driven, with the position corresponding to the predetermined point as the rotation center (C₁).

3. The three-dimensional image projector (1) according to claim 1, wherein the hologram recording medium (9a, 9b, 9c) of the projection image formation unit (4, 204) is preliminarily recorded with a plurality of holograms (11a, 11b, 11c, 211 a, 211b, 211c), which have been divided, of a mode formed by causing the reference light (L₃) and the object light (L₂) to fall incident on a range, where the predetermined range is divided at intervals, in synchronization with the rotation angle based on the rotational drive (3) simultaneously with when the medium is rotationally driven, with the position corresponding to the predetermined point serving as the rotation center (C₁).

4. The three-dimensional image projector (1) according to claim 2, wherein
the hologram recording medium includes a plurality of hologram sheet materials (9a, 9b, 9c) laminated on the substrate (8a, 8b), and
the plurality of holograms (11a, 11b, 11c) are respectively recorded on the plurality of hologram sheet materials.

5. The three-dimensional image projector (1) according to any one of claims 1 to 4, wherein the image light (G₁) falls incident toward a predetermined range on the substrate (8a, 8b) at an angle corresponding to the incidence angle of the reference light (L₃) and the object light (L₂) during the hologram recording relative to the surface on the substrate while the projection image formation unit (4, 204) is being rotationally driven by the drive unit (3).

## Patentansprüche

1. 3D-Bildprojektor (1), mit:
einer Bildformierungsprojektionseinheit (4, 204), in der ein Hologrammaufnahmemedium (9a, 9b, 9c) entlang eines plattenförmigen Substrats (8a, 8b) ausgebildet ist und die Bildlicht (G₁) projiziert, und zwar durch Verursachen, dass das Licht eine Richtung aufweist, um auf das Hologrammaufnahmemedium einzufallen; und
einer Antriebseinheit (3), welche die Bildformierungsprojektionseinheit entlang einer Fläche des Substrats mit einem festgelegten Punkt auf der Fläche als Rotationsmittelpunkt (C₁) dienend drehend antreibt und dabei verursacht, dass das Bildlicht zur Bildprojektion auf die Bildformierungsprojektionseinheit einfällt,
wobei das Hologrammaufnahmemedium der Bildformierungsprojektionseinheit vorläufig mit einem Hologrammmodus aufgenommen wird, der durch verursachen, dass Referenzlicht (L₃) und Objektlicht (L₂) als zwei von Laserstrahlen erzeugte parallele Lichter gleichzeitig auf das Hologrammaufnahmemedium einfallen, während ihr Einfallswinkel (θ₁) in einem festgelegten Bereich einschließlich einer mit dem festgelegten Punkt korrespondierenden Position im Wesentlichen gleich gehalten wird, ausgebildet wird.

2. 3D-Bildprojektor (1) nach Anspruch 1, bei dem das Hologrammaufnahmemedium (9a, 9b, 9c) der Bildformierungsprojektionseinheit (4, 204) vorläufig mit einer Vielzahl von Hologrammen (11a, 11b, 11c, 211a, 211b, 211c) aufgenommen wird, die einander in mehrfachen Lagen eines Modus überlappen, die durch verursachen, dass das Referenzlicht (L₃) und das Objektlicht (L₂), während das Medium mit der dem festgelegten Punkt entsprechenden Position als Rotationsmittelpunkt (C₁) drehend angetrieben wird, auf den festgelegten Bereich einfallen, ausgebildet werden.

3. 3D-Bildprojektor (1) nach Anspruch 1, bei dem das Hologrammaufnahmemedium (9a, 9b, 9c) der Bildformierungsprojektionseinheit (4, 204) mit einer Vielzahl von Hologrammen (11a, 11b, 11c, 211a, 211b, 211c), die aufgeteilt worden sind, vorläufig aufgenommen wird, mit einem Modus, der durch verursachen, dass das Referenzlicht (L₃) und das Objektlicht (L₂) in einen Bereich einfallen, wo der festgelegte Bereich in Intervallen aufgeteilt ist, ausgebildet wird, und zwar synchron mit dem auf dem Rotationsantrieb (3) basierenden Drehwinkel und gleichzeitig mit dem drehend angetriebenen Medium, mit der dem festgelegten Punkt entsprechenden Position als Rotationsmittelpunkt (C₁) dienend.

4. 3D-Bildprojektor (1) nach Anspruch 2, bei dem
das Hologrammaufnahmemedium eine Vielzahl von Hologrammlagenmaterialien (9a, 9b, 9c) aufweist, die auf das Substrat (8a, 8b) laminiert sind, und
die Vielzahl von Hologrammen (11a, 11b, 11c) jeweilig auf der Vielzahl von Hologrammfolienmaterialien aufgenommen werden.

5. 3D-Bildprojektor (1) nach einem der Ansprüche 1 bis 4, bei dem das Bildlicht (G₁) während der Hologrammaufnahme in Richtung eines festgelegten Bereichs auf dem Substrat (8a, 8b) in einem Winkel einfällt, der dem Einfallswinkel des Referenzlichts (L₃) und des Objektlichts (L₂) relativ zu der Fläche auf dem Substrat entspricht, während die Bildformierungsprojektionseinheit (4, 204) drehend durch die Antriebseinheit (3) angetrieben wird.

## Revendications

1. Appareil de projection d'images en trois dimensions (1), comprenant :
une unité de formation d'image de projection (4, 204) où un support d'enregistrement d'hologramme (9a, 9b, 9c) est formé le long d'un substrat tabulaire (8a, 8b), et qui projette la lumière d'image (G₁) en amenant la lumière d'image ayant une directivité à tomber de manière incidente sur le support d'enregistrement d'hologramme ; et
une unité d'entraînement (3) qui entraîne en rotation l'unité de formation d'image de projection le long d'une surface du substrat, avec un point prédéterminé sur la surface servant de centre de rotation (C₁), tout en amenant la lumière d'image pour la projection d'image à tomber de manière incidente sur l'unité de formation d'image de projection,
dans lequel le support d'enregistrement d'hologramme de l'unité de formation d'image de projection est préalablement enregistré avec un hologramme d'un mode qui est formé en amenant une lumière de référence (L₃) et une lumière objet (L₂) en tant que deux lumières parallèles générées à partir de faisceaux laser à tomber simultanément de manière incidente sur le support d'enregistrement d'hologramme, tout en maintenant essentiellement le même angle d'incidence (θ₁) de celles-ci, dans une plage prédéterminée comportant une position correspondant au point prédéterminé.

2. Appareil de projection d'images en trois dimensions (1) selon la revendication 1, dans lequel le support d'enregistrement d'hologramme (9a, 9b, 9c) de l'unité de formation d'image de projection (4, 204) est préalablement enregistré avec une pluralité d'hologrammes (11a, 11b, 11c, 211a, 211b, 211c) qui se chevauchent mutuellement dans de multiples couches d'un mode qui sont formés en amenant la lumière de référence (L₃) et la lumière objet (L₂) à tomber de manière incidente sur la plage prédéterminée simultanément lorsque le support est entraîné en rotation, avec la position correspondant au point prédéterminé comme centre de rotation (C₁).

3. Appareil de projection d'images en trois dimensions (1) selon la revendication 1, dans lequel le support d'enregistrement d'hologramme (9a, 9b, 9c) de l'unité de formation d'image de projection (4, 204) est préalablement enregistré avec une pluralité d'hologrammes (11a, 11b, 11c, 211a, 211b, 211c), qui ont été divisés, d'un mode formés en amenant la lumière de référence (L₃) et la lumière objet (L₂) à tomber de manière incidente sur une plage, où la plage prédéterminée est divisée à des intervalles, en synchronisation avec l'angle de rotation sur la base de l'unité d'entraînement en rotation (3) simultanément lorsque le support est entraîné en rotation, avec la position correspondant au point prédéterminé servant de centre de rotation (C₁).

4. Appareil de projection d'images en trois dimensions (1) selon la revendication 2, dans lequel
le support d'enregistrement d'hologramme comporte une pluralité de matériaux en feuille d'hologramme (9a, 9b, 9c) stratifiés sur le substrat (8a, 8b), et
la pluralité d'hologrammes (11a, 11b, 11c) sont respectivement enregistrés sur la pluralité de matériaux en feuille d'hologramme.

5. Appareil de projection d'images en trois dimensions (1) selon l'une quelconque des revendications 1 à 4, dans lequel la lumière d'image (G₁) tombe de manière incidente vers une plage prédéterminée sur le substrat (8a, 8b) à un angle correspondant à l'angle d'incidence de la lumière de référence (L₃) et de la lumière objet (L₂) pendant l'enregistrement d'hologramme par rapport à la surface sur le substrat tandis que l'unité de formation d'image de projection (4, 204) est entraînée en rotation par l'unité d'entraînement (3).
